## Europäisches Patentamt
## European Patent Office
## Office européen des brevets

(19)

(11) Veröffentlichungsnummer: **0 204 782**
**B1**

(12) **EUROPÄISCHE PATENTSCHRIFT**

(45) Veröffentlichungstag der Patentschrift:
**25.01.89**

(51) Int. Cl.⁴: **B 01 D 3/10**, B 01 L 9/04

(21) Anmeldenummer: **86900094.3**

(22) Anmeldetag: **22.11.85**

(86) Internationale Anmeldenummer:
**PCT/EP 85/00639**

(87) Internationale Veröffentlichungsnummer:
**WO 86/03684 (03.07.86 Gazette 86/14)**

(54) **VAKUUMVERDAMPFER.**

(30) Priorität: 24.12.84 DE 3447433
24.12.84 DE 3447435

(43) Veröffentlichungstag der Anmeldung:
**17.12.86 Patentblatt 86/51**

(45) Bekanntmachung des Hinweises auf die Patenterteilung:
**25.01.89 Patentblatt 89/4**

(84) Benannte Vertragsstaaten:
**CH FR GB IT LI SE**

(56) Entgegenhaltungen:
**EP-A-0 149 972**
**EP-A-0 156 937**
**CH-A-411 783**
**GB-A-2 146 542**

(73) Patentinhaber: **Heidolph- Elektro GmbH & Co. KG,
Starenstrasse 23, D-8420 Kelheim/Donau (DE)**

(72) Erfinder: **RIEHL, Günther, Am Kohlenschacht 22 b,
D-8403 Bad Abbach (DE)**
Erfinder: **VOLLGOLD, Günther, Lerchenweg 10a,
D-8540 Schwabach (DE)**

(74) Vertreter: **Göbel, Matthias, Dipl.- Ing., Pruppacher
Hauptstrasse 5-7, D-8501 Pyrbaum- Pruppach (DE)**

INCOMPLETE DOCUMENT

## Revendications

1. Evaporateur sous vide qui est maintenu de façon verticalement réglable au moyen d'un dispositif de maintien sur un socle, caractérisé en ce que l'évaporateur sous vide (1) est disposé sur une douille de support (4) guidée de façon déplaçable verticalement sur un boulon (7) solidaire du socle, en ce que la douille de support (4) est portée par l'extrémité libre d'un bras de levier (8), ledit bras de levier (8) étant articulé, à son autre extrémité, sur une bielle (10) articulée de façon pivotante au socle (3') et s'appuyant par une douille filetée (13) reliée au bras de levier (8) et un arbre d'entrainement d'un motoréducteur (11) disposé de façon basculante sur le socle (3'), arbre engagé dans celle-ci et réalisé sous forme de broche filetée (12), et pouvant pivoter dans un plan vertical, et en ce que l'axe d'inclinaison (26) du motoréducteur (11) et les axes centraux des articulations (9, 10') de la bielle (10) s'étendent perpendiculairement au plan de basculement du bras de levier (8).

2. Evaporateur sous vide selon la revendication 1, caractérisé en ce que la douille filetée (13) est reliée de façon rotative au bras de levier (8) au moyen d'un axe (25) s'étendant perpendiculairement au plan de basculement du bras de levier (8).

3. Evaporateur sous vide selon les revendications 1 et 2, caractérisé en ce que le bras de levier (8) est relié à un manchon de couplage (14) qui entoure de façon librement mobile la douille filetée (13), et en ce que ledit manchon de couplage (14) et ladite douille filetée (13) peuvent être reliés l'un à l'autre ou être séparés l'un de l'autre au moyen d'une vis de réglage (16) guidée dans le manchon de couplage (14).

4. Dispositif selon la revendication 1, caractérisé en ce qu'un ressort d' amortissement (15) est intercalé entre le bras de levier (8) et le socle (3').

5. Dispositif selon la revendication 1, caractérisé en ce que le manchon de couplage (14) présente une tige (17) mobile transversalement, qui, en position de couplage, actionne un contact électrique (19) pour le motoréducteur (11) et dans les positions de séparation, le libére.

6. Dispositif selon la revendication, 1, caractérisé en ce que la position de fin de course supérieure et/ou la position de fin de course inférieure du bras de levier (8) ou de la douille de support (4) peuvent être déterminées par des interrupteurs de fin de course faisant saillie dans la course de pivotement du bras de levier et se trouvant dans le circuit de courant du motoréducteur (11).

7. Dispositif selon la revendication 1, caractérisé en ce que l'évaporateur sous ide (1) est supporté par un moteur d'entrainement (2) pour le piston de l'évaporateur (1'), qui peut être engagé dans la douille de support (4), et en ce que des broches d'enfichage électriques (5) et des douilles d'enfichage (6) sont disposées dans le plan de liaison du moteur d'entrainement (2) et de la douille de support (4).

8. Evaporateur sous vide selon la revendication 1 ayant des valeurs de travail réglables, notamment pour le degré du vide, la température d'ébullition, la vitesse du piston de l'évaporateur et la température du bain de chauffage, que peuvent être introduites dans une mémoire de travail et qui engendrent un cycle de travail avec les valeurs de travail introduites, caractérisé en ce une les valeurs de travail peuvent être introduites dans une mémoire de travail électronique (21) avec microprocesseur (22), par le biais d'une introduction codée et d'un clavier (19'), et en ce qu'elles peuvent être prélevés via une sortie codée et un clavier (19').

Fig. 1 einen Vakuumverdampfer schematisch mit einem Teilstück einer Haltevorrichtung,

Fig. 2 eine Haltevorrichtung in Vorderansicht, teilweise im Schnitt,

Fig. 3 einen Teilschnitt einer Haltevorrichtung,

Fig. 4 eine Trägerhülse im Schnitt mit einem ansteckbaren Antriebsmotor und

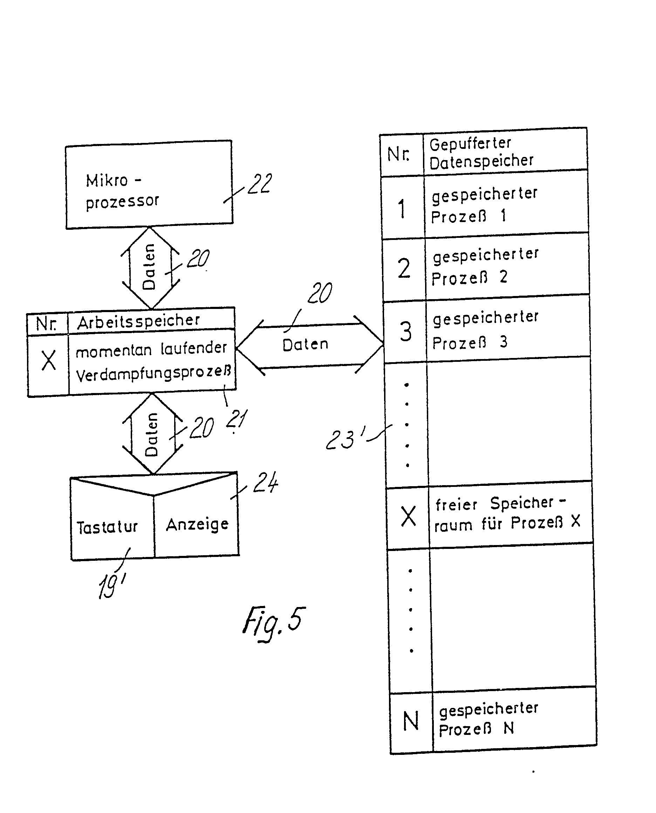

Fig. 5 eine Verdampfungsprozeßdatenspeicherung für einen Vakuumverdampfer.

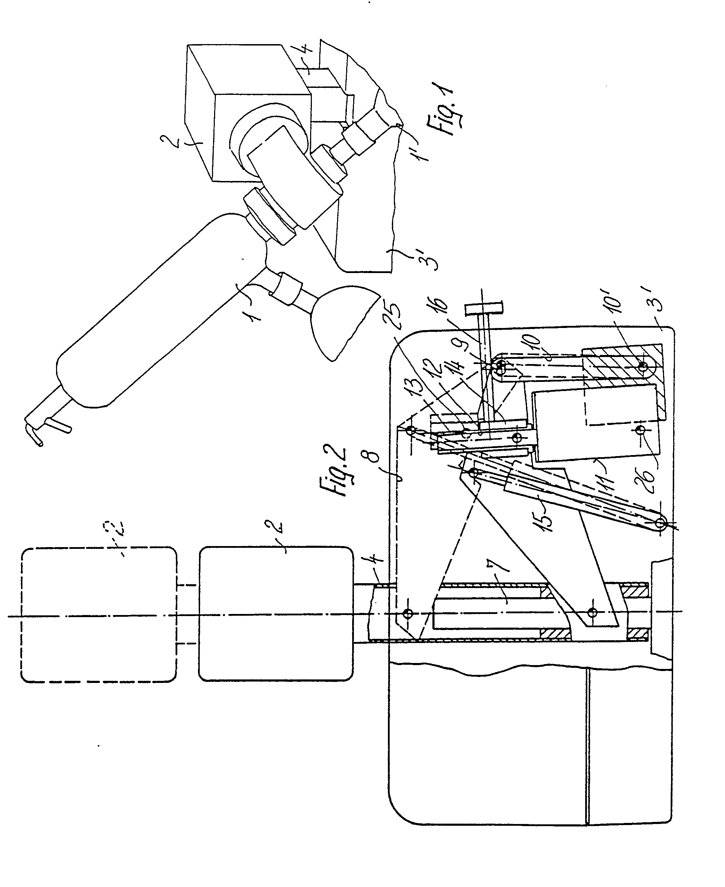

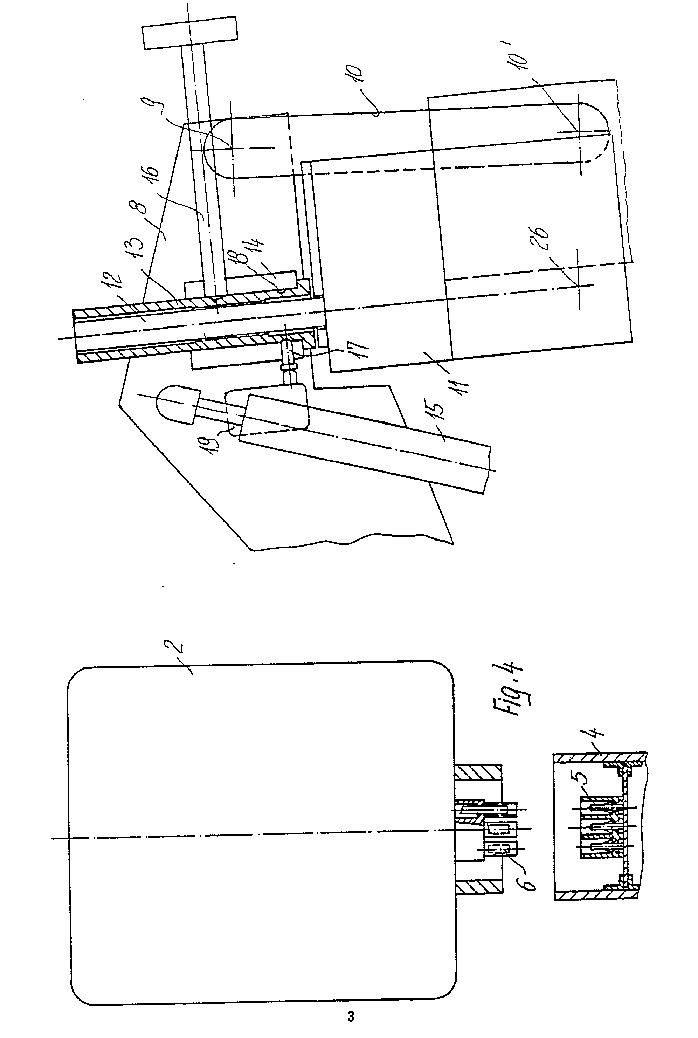

In den Figuren ist mit 1 ein an sich bekannter Vakuumverdampfer bezeichnet, dessen Verdampferkolben 1' durch einen Antriebsmotor 2 drehbar ist. Der Verdampferkolben 1' ist in gleichfalls bekannter Weise in ein am Fußgestell 3' gelagertes Wasserbad ( nicht gezeigt ) mehr oder weniger tief einbringbar. Der Vakuumverdampfer 1 ist hierzu mit dem Gehäuse des Antriebsmotors 2 fest verbunden. Der Antriebsmotor 2 ist auf einer Trägerhülse 4 fest, oder wie in Fig. 4 erkennbar, abnehmbar aufgesetzt. Bei abnehmbarer Verbindung sind in der gemeinsamen Trennungsebene von Antriebsmotor und Trägerhülse Steckerstifte 5 und Steckerhülsen 6 als elektrische Verbindungsmittel vorgesehen. Die Zuleitungen (nicht gezeigt) zu den Steckerstiften 5 sind durch die Trägerhülse 4 hindurchgeführt. Die Trägerhülse 4 ist auf einem fußgestellfesten Bolzen 7 verschieblich ausgebildet und auf diesem vermittels eines schwenkbaren Hebelarms 8 in der Vertikalen höhenveränderlich gehalten. Der Hebelarm 8 ist bei 9 an einer Stützlasche 10 angelenkt, die bei 10' schwenkbeweglich mit dem Fußgestell 3' verbunden ist. Zu selbsttätigen Schwenkbewegungen des Hebelarms 8 ist ein bei 26 am Fußgestell 3' schwenkbar gelagerter Getriebemotor 11 vorgesehen, dessen Abtriebswelle als Gewindespindel 12 ausgeführt ist und in einer Gewindehülse 13 eintaucht, die über eine bei 25 am Hebelarm 8 angelenkten Kupplungshülse 14 und eine Stellschraube 16 mit dem Hebelarm 8 in Verbindung steht. Zwischen dem Hebelarm 8 und dem Fußgestell 3' ist weiter eine Dämpfungsfeder 15, z. B. eine Gasdruckfeder eingespannt, deren Vorspannung zu einer Gewichtsentlastung beiträgt. Durch Drehen der Gewindespindel 12 verschieben sich die Gewindehülse 13 und die Kupplungshülse 14, wodurch der Hebelarm 8 die Trägerhülse 4 für den Vakuumverdampfer 1 in der Vertikalen hebt oder absenkt. Durch mehr oder weniger weites Drehen der Gewindelspindel 12 kann mittels des Getriebemotors 11 der Vakuumverdampfer 1 exakte Höhenstellungen einnehmen und bei Stillstand der Gewindespindel 12 gehalten werden. Für den Benutzer besteht so die Möglichkeit, den Verdampferkolben 1' zur Zuführung von mehr oder weniger Wärme mehr oder weniger weit in ein zugeordnetes Wasserbad einzutauchen. Zum Bewegen des Hebelarms 8 bei einem etwaigen Stromausfall ist die Kupplungshülse 14 durch Lösen der Stellschraube 16 von der Gewindehülse 13 trennbar und der Hebelarm 8 bevorzugt unter dem Einfluß der Dämpfungsfeder 15, z. B. in die gestrichelte Stellung der Fig. 2 anhebbar. Die Kupplungshülse 14 nimmt einen Stift 17 verschieblich auf, der in der Kuppelstellung von Gewindehülse 13 und Kupplungshülse 14 in eine Ringnut 18 der Gewindehülse 13 verrastet und den Schalter 19 einschaltet. Bei Relativbewegungen der Kupplungshülse 14 auf der Gewindehülse 13 wird der Stift 17 aus der Ringnut 18 ausgehoben und der Schalter 19 zur Trennungen des Getriebemotors 11 von der Stromquelle ausgeschaltet. Es versteht sich, daß der Hebelarm 8 mit beliebiger Länge ausgeführt sein kann.

Bei Betätigung des Vakuumverdampfers sind vermittels einer Tastatur 19' eine Anzahl Codeeingaben für Verdampfungsprozeßdaten 20, insbesondere Vakuumgrößen, Siedetemperaturen, Verdampferkolbendrehzahlen und Heizbadtemperaturen in einem Arbeitsspeicher 21 mit Mikroprozessor 22 eingebbar und bei 23' ablegbar. Mit 24 ist eine Anzeige bezeichnet. Die gespeicherten Verdampfungsprozesse können an der Tastatur 19' vermittels einer Codeausgabe zu vorbestimmten Verdampfungsprozessen abgerufen werden. Das Wesentliche der Erfindung ist dabei die Möglichkeit der Speicherung der Daten.

**Patentansprüche**

1. Vakuumverdampfer der mittels einer Haltevorrichtung auf einem Fußgestell in der Vertikalen einstellbar gehalten ist, dadurch gekennzeichnet, daß der Vakuumverdampfer (1) an einer auf einem fußgestellfesten Bolzen (7) vertikal verschieblich geführten Trägerhülse (4) angeordnet ist, daß die Trägerhülse (4) durch das freie Ende eines Hebelarmes (8) getragen ist, der mit seinem anderen Ende an einer am Fußgestell (3') kippbeweglich angelenkten Stützlasche (10) gelenkig angreift und durch eine mit dem Hebelarm (8) verbundene Gewindehülse (13) und einer in dieser eingreifenden, als Gewindespindel (12) ausgebildeten Abtriebswelle eines am Fußgestell (3') kippbeweglich angeordneten Getriebemotors (11) gestützt und in vertikaler Ebene verschwenkbar ist und daß sich die Kippachse (26) des Getriebemotors (11) und die Mittelachsen der Gelenke (9, 10') der Stützlasche (10) quer zur Schwenkebene des Hebelarms (8) erstrecken.

2. Vakuumverdampfer nach Anspruch 1, dadurch gekennzeichnet, daß die Gewindehülse (13) mit dem Hebelarm (8) durch eine zur Schwenkebene des Hebelarms (8) sich senkrecht erstreckende Achse (25) drehbar verbunden ist.

3. Vakuumverdampfer nach Anspruch 1 und 2, dadurch gekennzeichnet, daß mit dem Hebelarm (8) eine Kupplungshülse (14) verbunden ist, die die Gewindehülse (13) frei verschieblich umfaßt und daß die Kupplungshülse (14) und die Gewindehülse (13) mittels einer in der Kupplungshülse (14) geführten Stellschraube (16) miteinander verbindbar oder voneinander trennbar sind.

4. Vorrichtung nach Anspruch 1, dadurch gekennzeichnet, daß zwischen Hebelarm (8) und Fußgestell (3') eine Dämpfungsfeder (15) eingespannt ist.

5. Vorrichtung nach Anspruch 1, dadurch gekennzeichnet, daß die Kupplungshülse (14) einen quer verschieblichen Stift (17) aufweist, der in der Kuppelstellung ein elektrisches Schaltglied (19) für den Getriebemotor (11) betätigt und in den Trennstellungen freigibt.

6. Vorrichtung nach Anspruch 1, dadurch gekennzeichnet, daß die obere und/oder untere Endstellung des Hebelarms (8) bzw. der Trägerhülse (4) durch im Schwenkweg des Hebelarms einragende und im Stromkreis des Getriebemotors (11) liegende Endschalter bestimmbar sind.

7. Vorrichtung nach Anspruch 1, dadurch gekennzeichnet, daß der Vakuumverdampfer (1) durch einen an der Trägerhülse (4) ansteckbaren Antriebsmotor (2) für den Verdampferkolben (1') getragen ist und daß in der Verbindungsebene von Antriebsmotor (2) und Trägerhülse (4) elektrische Steckerstifte (5) und Steckerhülsen (6) angeordnet sind.

8. Vakuumverdampfer nach Anspruch 1 mit einstellbaren Arbeitswerten, insbesondere für Vakuumgröße, Siedetemperatur, Verdampferkolbendrehzahl und Heizbadtemperatur, die in einen Arbeitsspeicher eingebbar sind und einen Arbeitsablauf mit den eingegebenen Arbeitswerten bewirken, dadurch gekennzeichnet, daß die Arbeitswerte über eine Codeeingabe und Tastatur (19') in einen elektronischen Arbeitsspeicher (21) mit Mikroprozessor (22) eingebbar und über eine Codeausgabe und Tastatur (19') entnehmbar sind.

## Claims

1. Vacuum evaporator which is kept adjustable in the vertical line by means of a holding device on a pedestal, characterized in the way that the vacuum evaporator (1) is arranged at a carrier sheath (4), which is kept relocatable in vertical line on a bolt (7) fixed to the pedestal and that the carrier sheath (4) is supported by the free end of a lever arm (8) which with its other end is hinged on a supporting splicing plate (10) hinged tiltably on the pedestal (3') and which is supported and slewable in the vertical plane by means of a screw socket (13) connected with the lever arm (8) and a motor shaft figured as threaded spindle (12) of a geared motor (11) arranged tiltably at the pedestal (3'), which (12) gears in the screw socket. The vacuum evaporator is further characterized in the way that the tilting axle (26) of the geared motor (11) and the center lines of the links (9, 10') of the supporting splicing plate (10) extend cross to the slewing plane of the lever arm (8).

2. Vacuum evaporator according to claim 1, characterized in the way that the screw socket (13) is rotatably connected with the lever arm (8) by means of an axle (25), which extends vertically to the slewing plane of the lever arm (8).

3. Vacuum evaporator according to claims 1 and 2, characterized in the way that a coupling sleeve (14) is connected with the lever arm (8), which embraces the screw socket (13) freely relocatable, and that the coupling sleeve (14) and the screw socket (13) can be connected to or separated from each other by means of an adjusting screw (16), which is guided in the coupling sleeve (14).

4. Arrangement according to claim 1, characterized in the way that a compensating spring (15) is clamped between the lever arm (8) and the pedestal (3').

5. Arrangement according to claim 1, characterized in the way that the coupling sleeve (14) shows a cross-sliding pin (17) which in the coupling position operates an electric contact assembly (19) for the geared motor (11) and which releases the same in the separation positions.

6. Arrangement according to claim 1, characterized in the way that the upper and/or lower final position of the lever arm (8) respectively of the carrier sheath (4) can be determined by means of limit switches, which reach into the slewing range of the lever arm and which are located in the electric circuit of the geared motor (11).

7. Arrangement according to claim 1, characterized in the way that the vacuum evaporator (1) is carried by a driving motor (2) for the evaporator piston (1'), which is attachable to the carrier sheath (4), and that electric plug pins (5) and plug receptacles (6) are allocated in the connecting plane of driving motor (2) and carrier sheath (4).

8. Vacuum evaporator according to claim 1 with adjustable working values - in particular for the size of the vacuum, the temperature of ebullition, the speed of the evaporator piston and the temperature of the heating bath - which are fit for input into a primary store and which effect a working process by means of the entered working values, characterized in the way that the working values can be entered into an electronic primary store (21) with microprocessor (22) via a code input and keyboard (19') and that the working values can be withdrawn via a code output and keyboard (19').

## Revendications

1. Evaporateur au vide maintenu de façon réglable dans la verticale au moyen d'un dispositif de maintien se trouvant sur le socle, ledit évaporateur étant caractérisé par le fait que l'évaporateur au vide (1) est disposé de telle manière sur une douille de support (4) guidée de façon décalable verticalement sur un boulon (7) solidaire au socle que la douille de support (4) soit portée par l'extrémité libre d'un bras de levier (8), ledit bras de levier (8) agissant de façon articulée, avec son autre extrémité, sur l'éclisse d'appui (10) s'articulant de façon pivotante sur le socle (3') et s'appuyant par une douille filetée (13) reliée au bras de levier (8) et un arbre d'entraînement d'un motoréducteur (11) disposé de façon basculante sur le socle (3') et pouvant être pivoté dans un plan vertical ainsi que par le fait que l'axe d'inclinaison (26) du motoréducteur (11) et les axes centraux des articulations (9, 10') de l'éclisse d'appui (10) s'étendent perpendiculairement au plan de basculement du bras de levier (8).

2. Evporateur au vide répondant à la revendication 1, caractérisé par le fait que la douille filetée (13) est reliée de façon rotative avec le bras de levier (8) au moyen d'un axe (25) s'étendant perpendiculairement au plan de pivotage du bras de levier (8).

3. Evaporateur au vide répondant aux revendications 1 et 2, caractérisé par le fait que le bras de levier (8) se trouve relié à une douille d'accouplement (14) qui entoure librement la douille filetée (13) d'une manière telle que ladite douille d'accouplement (14) et ladite douille filetée (13) peuvent être assemblées ensemble ou être séparées l'une de l'autre au moyen d'une vis de réglage (16) guidée dans la douille d'accouplement (14).

4. Dispositif répondant à la revendication 1, caractérisé par le fait qu'un ressort d'amortissement (15) est intercalé entre le bras de levier (8) et le socle (3').

5. Dispositif répondant à la revendication 1, caractérisé par le fait que la douille d'accouplement (14) présente une tige (17) pouvant être décalée transversalement et qui, en position d'accouplement, manoeuvre un contact électrique (19) pour le motoréducteur (11) qu'elle libère dans les positions de séparation.

6. Dispositif répondant à la revendication 1, caractérisé par le fait que la position de fin de course supérieure et/ou la position de fin de course inférieure du bras de levier (8) ou de la douille d'appui (4) peuvent être déterminées par des interrupteurs de fin de course faisant saillie dans la course du pivotage du bras de levier et se trouvant dans le circuit de courant du motoréducteur (11).

7. Dispositif répondant à la revendication 1, caractérisé par le fait que l'évaporateur au vide (1) est supporté par un moteur d'entraînement (2) pour le piston de l'évaporateur (1'), qui peut être engagé dans la douille de support (4) et que des broches d'enfichage électriques (5) et des douilles d'enfichage (6) sont disposées dans le plan de liaison du moteur d'entraînement (2) et de la douille d'appui (4).

8. Evaporateur au vide répondant à la revendication 1 avec des valeurs de travail réglables, notamment pour la grandeur du vide, la température d'ébullition, la vitesse du piston de l'évaporateur et la température du bain de chauffage, qui peuvent être introduites dans une mémoire de travail et qui engendrent un cycle de travail avec les valeurs de travail, ledit évaporateur étant caractérisé par le fait que les valeurs de travail peuvent être introduites dans une mémoire de travail électronique (21) avec microprocesseur (22), par le biais d'une introduction codée et d'un clavier (19'), et qu'elles peuvent être prélevées via une sortie codée et un clavier (19').

Fig.2

Fig.1

Fig. 4

Fig. 5